# EUROPÄISCHE PATENTSCHRIFT

(11) **EP 1 163 287 B1**
(45) Veröffentlichungstag und Bekanntmachung des Hinweises auf die Patenterteilung: **02.04.2003**
(21) Anmeldenummer: 99965577.2
(22) Anmeldetag: 29.12.1999
(51) Int. Cl.: C08J 7/00

(54) **VERFAHREN ZUR BEEINFLUSSUNG DER OPTISCHEN EIGENSCHAFTEN VON POLYMEREN**
METHOD FOR INFLUENCING THE OPTICAL PROPERTIES OF POLYMERS
PROCEDE POUR INFLUER SUR LES PROPRIETES OPTIQUES DE POLYMERES

(30) Priorität: 29.01.1999 DE 19903632
(43) Veröffentlichungstag der Anmeldung: 19.12.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: KÖHL, Michael, D-79379 Britzingen (DE); BRUCKER, Franz, D-79102 Freiburg (DE)
(74) Vertreter: Pfenning, Meinig & Partner GbR
(86) Internationale Anmeldenummer: EP9910462
(87) Internationale Veröffentlichungsnummer: WO00044817

(56) Entgegenhaltungen:
- DE-A- 4 014 164
- DE-A- 19 517 625
- US-A- 2 260 543
- US-A- 5 417 515
- DATABASE WPI Section Ch, Week 198611 Derwent Publications Ltd., London, GB; Class A35, AN 1986-071431 XP002137242 & JP 60 110379 A (TOYOTA JIDOSHA KK), 15. Juni 1985 (1985-06-15)

## Beschreibung

Die Erfindung betrifft ein Verfahren zur Beeinflussung der optischen Eigenschaften von Polymeren, wobei es sich um vollständig aus einem Polymer bestehende Körper, mit einem Polymer beschichtete Körper oder andere Polymer-Halbzeuge handeln kann. Dabei ist auch die entsprechende Beeinflussung der Eigenschaften von Polymerfilmen oder -folien ohne weiteres möglich. Mit der Erfindung kann Einfluß auf die Farbgebung, die Lumineszenz, selektive Reflexion bzw. Absorption bestimmter Wellenlängenbereiche von elektromagnetischer Strahlung und hier insbesondere im Wellenlängenbereich des sichtbaren Lichtes genommen werden kann.

Üblicherweise werden die optischen Eigenschaften, auch von Polymeren, durch beispielsweise Einfärbung mit Pigmenten, die bei entsprechenden Herstellungsverfahren, wie beim Spritzgießen oder Extrudieren in das Ausgangsmaterial eingemischt werden, erreicht. Dabei ist für die Erweckung eines entsprechenden optischen Eindruckes, z.B. bei einer Einfärbung eine entsprechend große Pigment-Partikelmenge erforderlich, die wünschenswert homogen im zu beeinflussenden Polymermaterial verteilt eingebracht werden müssen.

Dies wirkt sich insbesondere bei kostenintensiven Pigmenten äußerst nachteilig aus, da im Vergleich zum zu erreichenden optischen Effekt eine große Menge solcher Pigment-Partikel erforderlich sind. Ein hoher Anteil dieser Pigment-Partikel kann aber, da er im Inneren eines solchen Polymergebildes angeordnet ist, nahezu keine optische Wirkung entfalten.

Eine weitere Alternative zur Beeinflussung der optischen Eigenschaften solcher Polymere ist das Aufbringen einer entsprechenden Beschichtung mit den verschiedensten bekannten Verfahren, wie z.B. PVD, CVD, Sol-Gel-Verfahren u.a.. Diese bekannten Beschichtungsverfahren sind zum Teil wegen des hohen Anlagenaufwandes kostenintensiv und zum anderen sind häufig Haftungsprobleme solcher Beschichtungen zu verzeichnen, so daß über einen längeren Zeitraum zumindest Teile einer solchen Beschichtung abplatzen können und der gewünschte optische Effekt im Nachgang wieder aufgehoben wird.

Aus der US-A-5 417 515 ist ein Verfahren zur Beeinflussung der optischen Eigenschaften von polymeren bekannt. Dabei werden Lichtbrechende Partikel eingesetzt.

Es ist daher Aufgabe der Erfindung, eine Möglichkeit vorzuschlagen, mit der die optischen Eigenschaften von Polymeren kostengünstig und dauerhaft beeinflußt werden können.

Erfindungsgemäß wird diese Aufgabe mit den Merkmalen des Anspruchs 1 gelöst. Vorteilhafte Ausgestaltungsformen und Weiterbildungen der Erfindung ergeben sich mit den in den untergeordneten Ansprüchen genannten Merkmalen.

Erfindungsgemäß werden die optischen Eigenschaften von Polymeren daher dadurch beeinflußt, indem dem jeweiligen optisch zu erreichenden Effekt angepaßte Pigment-Partikel lediglich unmittelbar in die Oberfläche bzw. in oberflächennahe Bereiche eines Polymers, sei es ein Polymerkörper, ein Polymer-Halbzeug, eine Polymerbeschichtung, ein Polymerfilm oder eine Polymerfolie, eingebettet werden.

Unter Pigmente sollen hierbei alle Partikel oder Stoffe fallen, die eine optische Wirkung haben oder einen optischen Effekt hervorrufen können.

Erfindungsgemäß ist weiter vorgesehen daß im Anschluß an die Pigment-Partikeleinbettung eine Versiegelung der Polymer-Oberfläche durchgeführt wird, wobei in der Regel die mit der Einbettung der Pigment-Partikel gewünschten optischen Einflüsse im Nachgang nicht beeinträchtigt werden sollen. Dabei soll insbesondere die Transparenz nicht beeinflußt werden.

Die erfindungsgemäße Lösung berücksichtigt insbesondere die Tatsache, daß die Wechselwirkung von elektromagnetischer Strahlung im wesentlichen im Oberflächenbereich auftritt. Dies betrifft insbesondere zu erreichende Lumineszenzeffekte, wie z.B. die Fluoreszenzanregung von Photo-Sensibilisatoren, wobei in der Regel ein unmittelbarer Kontakt mit einem Fluid an der Polymer-Oberfläche erforderlich ist.

Ähnlich wirkt auch, die für viele Anwendungsfälle wünschenswerte Absorption elektromagnetischer Strahlung zum Schutz des Polymers bzw. eines entsprechend mit diesem beschichteten Substrates, um z.B. der Alterung oder anderer unerwünschter Materialeigenschaftsänderung infolge von Erwärmung entgegen zu wirken. So werden beispielsweise für die Reflexion elektromagnetischer Wellen im Wellenlängenbereich des infraroten Lichtes Pigment-Partikel aus Metallen eingesetzt, um z.B. Wärmestrahlungsverluste bzw. die bereits erwähnten unerwünschten Erwärmungen zumindest zu verringern. So können z.B. UV-Stabilisatoren lediglich an der Oberfläche und/oder in oberflächennahen Bereichen vorhanden sein, so daß unmittelbar da wirken können, wo ihre Wirkung benötigt wird.

Da hier lediglich entsprechend der gewünschten zu erzielenden optischen Eigenschaften ausgewählte Pigment-Partikel unmittelbar in die Oberfläche oder in oberflächennahe Bereiche der Polymere eingebettet werden, kann gegenüber den herkömmlich verwendeten Mischungen von Pigment und Polymer erheblich Pigment-Partikelmaterial eingespart und die Kosten reduziert werden.

Für die Durchführung des erfindungsgemäßen Verfahrens bestehen mehrere Möglichkeiten. Dabei können die Pigment-Partikel in eine bevorzugt plane Oberfläche mittels chemischer, mechanischer oder thermischer Verfahren eingebettet werden. Es besteht auch die Möglichkeit, die Einbettung mit einer Kombination solcher Verfahren durchzuführen.

So kann beispielsweise die Polymeroberfläche mit einem polymerspezifischen Lösungsmittel, das für sich gesehen für die verschiedenen Polymere bekannt ist, beaufschlagt und zumindest ein Anlösen des Polymers an der Oberfläche bzw. im oberflächennahen Bereich erreicht werden. In das so angelöste Polymer können dann die Pigment-Partikel eingebettet werden, wobei in einigen Fällen bereits ein entsprechend dosiertes Aufstreuen von Pigment-Partikeln in möglichst gleichmäßiger Verteilung ausreichen kann. Nach dem Verdampfen des Lösungsmittels, sind die entsprechenden Pigment-Partikel zumindest teilweise vom Polymer umschlossen bzw. werden von diesem mit entsprechenden Bindungskräften gehalten, so daß der gewünschte optische Eindruck erzielt werden kann.

Es besteht aber auch die Möglichkeit, die verschiedenen Pigment-Partikel in die angelöste Oberfläche durch Einwirkung mechanischer Kräfte einzupressen und/oder einzuwalzen, was sich insbesondere bei von ebenen Oberflächenformen abweichenden Konturen günstig auswirken kann.

Eine weitere Möglichkeit für die entsprechende Einbettung von Pigment-Partikeln besteht darin, zumindest die Oberfläche oder den oberflächennahen Bereich des Polymers soweit zu erwärmen, daß die Erweichungstemperatur des jeweiligen Polymers erreicht wird. In das erweichte Polymer können dann wieder, die entsprechend den gewünschten optischen Eigenschaften ausgewählten Pigment-Partikel eingebettet werden. Die Erwärmung kann z.B. durch entsprechende Bestrahlung oder auch in einem geeigneten Ofen durchgeführt werden. Die Pigment-Partikel werden vorteilhaft, analog, wie beim Anlösen mit geeigneten Lösungsmitteln beschrieben, wieder eingepreßt und/oder eingewalzt werden. Dabei kann die Verfahrensführung, d.h. die verwendete Pigment-Partikelmenge, die jeweilige Pigment-Partikelkörnung, die Einpreßkraft bzw. die Einwalztiefe in wünschenswerter Form variiert werden, um den zu erreichenden optischen Effekt Rechnung zu tragen.

Es kann auch ohne weiteres, das aus anderen Bereichen der Technik bekannte Heißprägeverfahren eingesetzt werden.

Günstig kann es sein, wenn auf der Polymer-Oberfläche eine Mikrostruktur ausgebildet wird, in deren Vertiefungen Pigment-Partikel eingebracht und im Anschluß daran durch thermische, mechanische und/oder chemische Behandlung, die in den Vertiefungen eingebetteten Pigment-Partikel versiegelt werden.

So kann beispielsweise ein vorab mit einer entsprechenden Mikrostruktur versehenes Halbzeug aus einem entsprechenden Polymer oder ein oder ein mit einem Polymer beschichtetes Halbzeug verwendet werden, bei dem die Mikrostruktur z.B. durch ein Prägeverfahren oder im Spritzguß ausgebildet worden ist.

Dabei sollten die Strukturperiode und die Strukturtiefe der jeweiligen verwendeten Körnung der Pigment-Partikel und/oder der gewünschten Schichtdicke des pigmentierten Bereiches ausgebildet werden. Es kann sich dabei um Größenordnungen vom nm- bis in den mm-Bereich handeln, wobei eine entsprechende Optimierung bezüglich des zu erreichenden optischen Effektes und der verwendeten Polymere bzw. Pigment-Partikel vorgenommen werden sollte.

Mit der Erfindung können beispielsweise auch die von Natur aus nicht kompatiblen Pigmente und Substratmaterialien (z.B. PMMA und hydrophile Pigmente) entsprechend verarbeitet und optische Effekte erreicht werden. Dies trifft insbesondere dann zu, wenn die Einbettung ohne zusätzliche Additive bzw. Lösungsmittel erfolgen kann.

Mit dem erfindungsgemäßen Verfahren können ausgewählte Oberflächenbereiche entsprechend pigmentiert werden, so daß dadurch auch ein zusätzlich kennzeichnender optischer Effekt erreicht werden. Es besteht also auf relativ einfache Art und Weise die Möglichkeit, bestimmte Oberflächenbereiche von einer Pigmentierung auszuschließen.

Außerdem können Pigment-Partikel aus verschiedenen Materialien und demzufolge auch mit unterschiedlichen optischen Eigenschaften und Farben sowohl gemeinsam, wie auch lokal getrennt voneinander verwendet werden. Eine Variation der Körnung der verwendeten Pigment-Partikel, die lokal in verschiedenen Oberflächenbereichen eingebettet werden, kann ebenfalls bestimmte optische Effekte bewirken. Selbstverständlich besteht auch die Möglichkeit, Mischungen von Pigment-Partikeln bezüglich Partikelmaterial und Partikelkörnung zu verwenden.

Nachfolgend soll die Erfindung beispielhaft beschrieben werden.

Dabei zeigen:
- Figur 1: eine schematische Darstellung von Pigment-Partikeln, die in der Oberfläche bzw. im oberflächennahen Bereich eines Polymers eingebettet sind;
- Figur 2: eine an der Oberfläche eines Polymers ausgebildete Mikrostruktur;

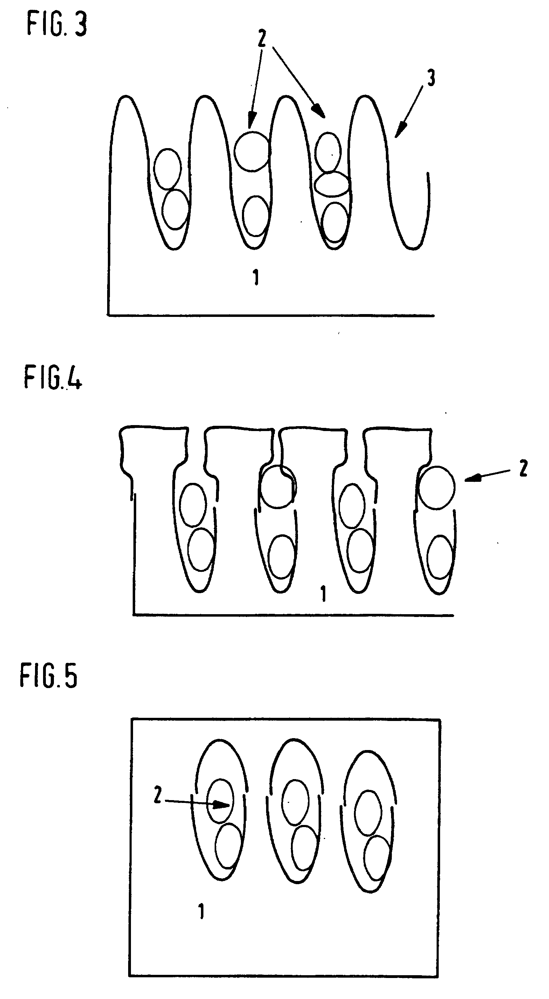

- Figur 3: in die Vertiefungen der Mikrostruktur eingebrachte Pigment-Partikel;
- Figur 4: eine teilweise versiegelte Pigment-Partikel enthaltende Mikrostruktur und
- Figur 5: eine vollständig versiegelte Polymer-Oberfläche.

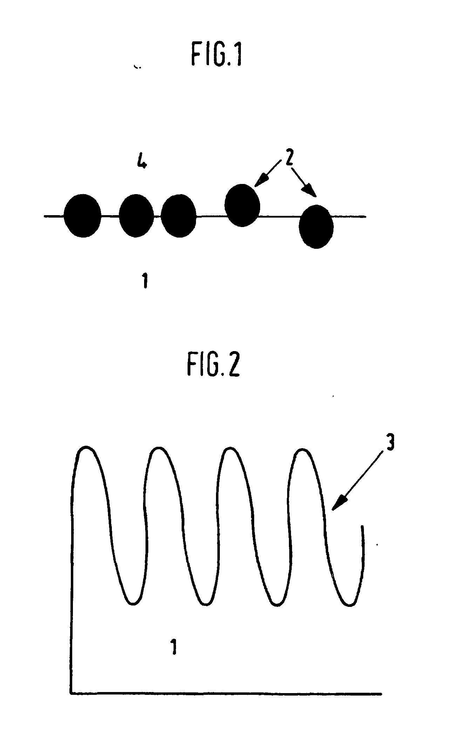

In der Figur 1 ist schematisch dargestellt, wie Pigment-Partikel 2 in die Oberfläche bzw. in oberflächennahe Bereiche eines Polymers 1 eingebettet sind. Dabei können die eingebetteten Pigment-Partikel 2 mit einem fluidischen Medium 4, das in unmittelbarem Kontakt mit der pigmentierten Oberfläche steht, entsprechend wechselwirken, so daß bestimmte Lumineszenzeffekte, wie z.B. Fluoreszenzanregung oder Fluoreszenzlöschung ausgenutzt werden können.

In der Figur 2 ist eine Mikrostruktur 3, die hier mit kontinuierlicher Strukturperiode und Strukturtiefe in der Oberfläche des Polymers 1 ausgebildet worden ist, dargestellt. Die Mikrostruktur 3 kann, wie bereits im allgemeinen Teil der Beschreibung erwähnt, auf verschiedene Art und Weise ausgebildet werden, wobei in bestimmten Fällen, in hier nicht dargestellter Form, auch die Variation der Strukturperiode bzw. der Strukturtiefe vorgenommen werden kann.

In die Vertiefungen der Mikrostruktur 3 können dann entsprechend ausgewählte Pigment-Partikel 2, mit der der Mikrostruktur 3 angepaßten Körnung eingebracht werden und im Nachgang hierzu, wie in den Figuren 4 und 5 gezeigt, eine Versiegelung vorgenommen werden.

Dabei zeigt die Figur 4 eine teilweise Versiegelung der Oberfläche des Polymers 1, bei der die die Pigment-Partikel 2 enthaltenden Strukturvertiefungen nur teilweise und so verschlossen werden, daß ein Herausfallen der Pigment-Partikel 2 verhindert wird. Auch in diesem Fall können die Pigment-Partikel 2 in unmittelbaren Kontakt mit einem fluidischen Medium 4 kommen und entsprechende Wechselwirkungen auftreten.

In der Figur 5 ist gezeigt, wie die Oberfläche des mit eingebetteten Pigment-Partikeln 2 versehenen Polymers 1 vollflächig versiegelt und demzufolge auch gegenüber dem umgebenden Medium 4 abgeschlossen ist.

Die Versiegelung, d.h. der teilweise bzw. vollständige Verschluß der vorab ausgebildeten Mikrostruktur 3 kann auf thermischem, mechanischem oder chemischem Wege sowie einer Kombination dieser Möglichkeiten erreicht werden. Dabei sollte, wie bereits eingangs erwähnt, aber kein negativer Einfluß auf die gewünschten optischen Eigenschaften, die mit den eingebetteten Pigment-Partikeln 2 erreicht werden sollen, genommen werden.

## Patentansprüche

1. Verfahren zur Beeinflussung der optischen Eigenschaften von Polymeren,
bei dem in die Oberfläche oder in oberflächennahe Bereiche eines Polymers (1) oder einer Polymerschicht Pigment-Partikel (2) eingebettet werden und daß die Oberfläche versiegelt wird.

2. Verfahren nach Anspruch 1,
**dadurch gekennzeichnet, daß** die Polymeroberfläche mit einem polymerspezifischen Lösungsmittel beaufschlagt und die Pigment-Partikel (2) in den zumindest angelösten Oberflächenbereich eingebettet werden.

3. Verfahren nach Anspruch 1,
**dadurch gekennzeichnet, daß** zumindest die Polymeroberfläche bis oberhalb der Erweichungstemperatur des Polymers (1) erwärmt und im Anschluß daran die Pigment-Partikel (2) in den erweichten Bereich eingebettet werden.

4. Verfahren nach Anspruch 3,
**dadurch gekennzeichnet, daß** die Polymer-Partikel (2) mittels Heißprägen eingebettet werden.

5. Verfahren nach Anspruch 1,
**dadurch gekennzeichnet, daß** die Pigment-Partikel (2) mit mechanischen Verfahren eingebettet werden.

6. Verfahren nach Anspruch 5,
**dadurch gekennzeichnet, daß** die Pigment-Partikel (2) eingepreßt und/oder eingewalzt werden.

7. Verfahren nach Anspruch 1,
**dadurch gekennzeichnet, daß** in der Polymeroberfläche eine Mikrostruktur (3) ausgebildet; in die Vertiefungen der Mikrostruktur (3) Pigment-Partikel (2) eingebracht und die Mikrostruktur durch thermische, mechanische und/oder chemische Behandlung, die eingebetteten Pigment-Partikel (2) einschließend, versiegelt wird.

8. Verfahren nach Anspruch 7,
**dadurch gekennzeichnet, daß** die Mikrostruktur (3) eingeprägt oder bei einem Spritzgießverfahren ausgebildet wird.

9. Verfahren nach Anspruch 7 oder 8,
**dadurch gekennzeichnet, daß** eine Mikrostruktur (3) mit einer der jeweiligen Pigment-Partikelkörnung und/oder der jeweiligen zu pigmentierenden Schichtdicke angepaßter Strukturperiode und/oder Strukturtiefe ausgebildet wird.

10. Verfahren nach einem der Ansprüche 1 bis 9,
**dadurch gekennzeichnet, daß** in ausgewählte Oberflächenbereiche des Polymers (1) Pigment-Partikel (2) eingebettet werden.

11. Verfahren nach einem der Ansprüche 1 bis 10,
**dadurch gekennzeichnet, daß** mindestens zwei Pigment-Partikelarten unterschiedlicher optischer Eigenschaften eingebettet werden.

12. Verfahren nach einem der Ansprüche 1 bis 11,
**dadurch gekennzeichnet, daß** eine Pigment-Partikelmischung eingebettet wird.

13. Verfahren nach Anspruch 12,
**dadurch gekennzeichnet, daß** eine Pigment-Partikelmischung unterschiedlicher Körnung und/oder verschiedener Farben oder optischer Eigenschaften verwendet wird.

## Claims

1. A method for influencing the optical properties of polymers,
in which pigment particles (2) are embedded into the surface or superficial regions of a polymer (1) or of a polymeric layer and that [sic] the surface is sealed.

2. A method according to Claim 1,
**characterised in that** the polymer surface is acted upon with a polymer-specific solvent and the pigment particles (2) are embedded in the at least partially dissolved superficial region.

3. A method according to Claim 1,
**characterised in that** at least the polymer surface is heated to above the softening temperature of the polymer (1) and thereafter the pigment particles (2) are embedded into the softened region.

4. A method according to Claim 3,
**characterised in that** the pigment particles (2) are embedded by means of hot stamping.

5. A method according to Claim 1,
**characterised in that** the pigment particles (2) are embedded by mechanical processes.

6. A method according to Claim 5,
**characterised in that** the pigment particles (2) are pressed in and/or rolled in.

7. A method according to Claim 1,
**characterised in that** a microstructure (3) is formed in the polymer surface, pigment particles (2) are introduced into the depressions of the microstructure (3), and the microstructure is sealed by thermal, mechanical and/or chemical treatment, trapping the embedded pigment particles (2).

8. A method according to Claim 7,
**characterised in that** the microstructure (3) is impressed, or formed in an injection-moulding process.

9. A method according to Claim 7 or 8,
**characterised in that** a microstructure (3) is formed with a structural period and/or structural depth matched to the pigment-particle granulation and/or to the thickness of the layer to be pigmented.

10. A method according to one of Claims 1 to 9,
**characterised in that** pigment particles (2) are embedded into selected superficial regions of the polymer (1).

11. A method according to one of Claims 1 to 10,
**characterised in that** at least two types of pigment particle of differing optical properties are embedded.

12. A method according to one of Claims 1 to 11,
**characterised in that** a mixture of pigment particles is embedded.

13. A method according to Claim 12,
**characterised in that** a pigment-particle mixture of differing granulation and/or of various colours or optical properties is used.

## Revendications

1. Procédé pour influer sur les propriétés optiques de polymères, dans lequel des particules pigmentaires (2) sont incorporées dans la surface ou dans la zone à proximité de la surface d'un polymère (1) ou d'une couche polymère et dans lequel la surface est vitrifiée.

2. Procédé selon la revendication 1, **caractérisé en ce que** la surface du polymère est pourvue d'un solvant spécifique pour le polymère et les particules pigmentaires (2) sont incorporées dans la zone de surface au moins attaquée.

3. Procédé selon la revendication 1, **caractérisé en ce qu'**on chauffe au moins la surface du polymère au-dessus de la température de ramollissement du polymère (1) et consécutivement, on incorpore les particules pigmentaires (2) dans la zone ramollie.

4. Procédé selon la revendication 3, **caractérisé en ce que** les particules pigmentaires (2) sont incorporées par estampage à chaud.

5. Procédé selon la revendication 1, **caractérisé en ce que** les particules pigmentaires (2) sont incorporées par des procédés mécaniques.

6. Procédé selon la revendication 5, **caractérisé en ce que** les particules pigmentaires (2) sont incorporées par compression et/ou par laminage.

7. Procédé selon la revendication 1, **caractérisé en ce qu'**on forme dans la surface du polymère une microstructure (3) ; on introduit particules pigmentaires (2) dans les creux de la microstructure (3) et la microstructure est vitrifiée par un traitement thermique, mécanique et/ou chimique, incluant les particules pigmentaires (2) incorporées.

8. Procédé selon la revendication 7, **caractérisé en ce que** la microstructure (3) est estampée ou formée lors d'un procédé de moulage par injection.

9. Procédé selon la revendication 7 ou 8, **caractérisé en ce qu'**on forme une microstructure (3) avec une période de structure et/ou une profondeur de structure adaptée à chaque granulométrie des particules pigmentaires et/ou à chaque épaisseur de couche à pigmenter.

10. Procédé selon l'une quelconque des revendications 1 à 9, **caractérisé en ce que** des particules pigmentaires (2) sont incorporées dans des zones de surface choisies du polymère (1).

11. Procédé selon l'une quelconque des revendications 1 à 10, **caractérisé en ce qu'**on incorpore au moins deux types de particules pigmentaires présentant des propriétés optiques différentes.

12. Procédé selon l'une quelconque des revendications 1 à 11, **caractérisé en ce qu'**on incorpore un mélange de particules pigmentaires.

13. Procédé selon la revendication 12, **caractérisé en ce qu'**on utilise un mélange de particules pigmentaires de différentes granulométries et/ou de différentes teintes ou propriétés optiques.
